(19) Europäisches Patentamt

European Patent Office

Office européen des brevets

(11) Veröffentlichungsnummer: **0 078 997**

**A2**

(12) # EUROPÄISCHE PATENTANMELDUNG

(21) Anmeldenummer: 82109968.6

(22) Anmeldetag: 28.10.82

(51) Int. Cl.³: **G 11 B 23/04**

(30) Priorität: 06.11.81 DE 8132444 U

(43) Veröffentlichungstag der Anmeldung:
18.05.83 Patentblatt 83.20

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Nerschbach, Gerhard
Nelkenstrasse 3
D-6704 Mutterstadt(DE)

(72) Erfinder: Pfefferkorn, Dietmar
Muehlweg 71
D-6944 Hemsbach(DE)

(72) Erfinder: Kreimes, Norbert
Rheinecke 14
D-6700 Ludwigshafen(DE)

(54) **Bandkassette mit einem Aufzeichnungsträger mit Magnetspur und Echolöscheinrichtungen für solche Bandkassetten.**

(57) Eine Bandkassette mit Aufzeichnungsband mit mindestens einer Magnetspur ist mit wenigstens einer Echolöscheinrichtung versehen, die das Aufzeichnungsband berührt. Die Echolöscheinrichtung kann aus einer Magnetaufzeichnung definierter Wellenlänge und mit vorgegebener Anordnung zur Bandlängsachse bestehen, die mit einem magnetischen Fluß im Bereich von ca. 2600 bis ca. 9000 nWb/m aufgezeichnet ist. Die Echolöscheinrichtung kann zweckmäßig an einem Teil das Kassettengehäuses, aber auch an geeigneten Bandkontaktelementen angebracht sein. Der Kopiereffekt ist mit Echolöscheinrichtungen für alle Arten von Bandkassetten zumindest erheblich reduzierbar.

FIG.5

EP 0 078 997 A2

## Bandkassette mit einem Aufzeichnungsträger mit Magnetspur und Echolöscheinrichtungen für solche Bandkassetten

Die Erfindung betrifft eine Bandkassette mit aufgewickeltem bandförmigen Aufzeichnungsträger, der mindestens eine Magnetspur aufweist, und Echolöscheinrichtungen für solche Bandkassetten.

Es ist bekannt (s. z.B. DE-PS 11 40 356 und 11 79 253), in Magnetbandgeräten als Einrichtung zur Verringerung des Kopiereffektes an Magnetogrammen ein magnetisiertes Tonbandstück mit dem bewegten Aufzeichnungsträger in Kontakt zu bringen, wobei das Tonbandstück eine sinusförmige Aufzeichnung mit über die Bandbreite anwachsender Phasenverschiebung aufweist. Das bekannte Tonbandstück, das auch als Echolöscheinrichtung bezeichnet werden kann, ist dabei mit der Rückseite, einer Polyesterfolie, nach außen auf einem schwenkbaren Klotz angebracht, der deshalb schwenkbar gelagert ist, damit die Löschung nur zeitweise durchführbar ist.

Der Kopiereffekt ist bekannterweise eine Störung, die bei starken Aufzeichnungen von einer Bandwindung zur nächsten durch Magnetisierung, insbesondere bei längerer Lagerung hinüberwirkt (kopiert), und die möglichst niedrig für hochwertige Aufnahmen sein soll. Die Kopierdämpfung ist das Verhältnis zweier Wiedergabespannungen eines Tonsignals, einmal direkt abgetastet und einmal zur innenliegenden Nachbarwindung durchkopiert.

Es ist aus der DE-PS 846 801 auch bekannt, den Kopiereffekt bei aufgespulten Magnettonbändern durch Mitaufwickeln eines unbespielten ferromagnetischen Bandes zu vermeiden, wodurch eine magnetische Abschirmung der Originalaufzeichnung erreicht wird.

De/Ke

Bekannte Vorrichtungen wie der obenbeschriebene Echolöschblock oder das Abschirmband sind für Magnetbandanordnungen
geeignet, bei denen es an Raum für besagten Schwenkklotz
oder den notwendigen zusätzlichen Wickelraum nicht
mangelt.

Es ist Aufgabe der vorliegenden Erfindung, eine Bandkassette
der eingangs definierten Art, derartig auszubilden, daß
ein Kopiereffekt verringert wird.

Erfindungsgemäß wird die Aufgabe mit einer Bandkassette
mit aufgewickeltem bandförmigen Aufzeichnungsträger,
der mindestens eine Magnetspur aufweist, dadurch gelöst,
daß im Wege des vom Bandwickel getrennten Aufzeichnungsträgers mindestens eine Echolöscheinrichtung in der
Kassette vorgesehen ist.

Dadurch wird ein bei hochremanenten Magnetschichten
und/oder hohen Bandgeschwindigkeiten auftretenden Kopiereffekt mit einfachen Mitteln reduzierbar, so daß auftretende Störungen nicht mehr wahrgenommen werden können.

Im Bereich der Tonbandkassetten war infolge der relativ
niedrig-remanenten Magnetschichten und der niedrigen Bandgeschwindigkeit ein Kopiereffekt lange Zeit nicht feststellbar. Erst in den letzten Jahren trat dieser Effekt
wieder umso störender in Erscheinung je höher die
Koerzitivfeldstärken und Remanenzen der Magnetschichten
und Bandgeschwindigkeiten geschraubt wurden. Erfindungsgemäß
ist es jetzt vorteilhaft möglich, bei solchen Magnetschichten den Kopiereffekt zu reduzieren. Zweckmäßig kann
die Echolöscheinrichtung aus einem magnetischen Körper, insbesondere einer Magnetschicht, bestehen. Dadurch wird sie
einfach an geeigneten Stellen innerhalb der Kassette anbringbar.

Der magnetische Körper kann auch aus einem Magnetbandstück mit einer Aufzeichnung bestehen, so daß seine Herstellung auch für die Serienfertigung problemlos ist.

Insbesondere besitzt die Magnetaufzeichnung eine Wellenlänge von 380 /um und schließt einen Winkel von 10 bis 45°, insbesondere von 25°, zur Bandlängsachse ein.

Die Echolöscheinrichtung kann prinzipiell an jedem Teil der Kassette, mit dem das Band mindestens zeitweise in Kontakt steht, vorgesehen sein, so zum Beispiel an Kasseteninnenwänden, Bandführungselementen, Andruckelementen und/oder am Kopf selbst.

Vorteilhafterweise kann die Echolöscheinrichtung an einem Bandführungselement vorgesehen sein, das eine größere Kontaktfläche mit dem Band aufweist, wie z.B. stationäre oder bewegliche Bandführungselemente in der Kassette. Vorteilhaft eignen sich dafür die in Kompaktkassetten bekannten Bandführungshebel.

Praktisch kann an der Bandführungsfläche eines derartigen Hebels ein Echolösch-Bandstück befestigt sein, wodurch auch eine nachträgliche Anbringung oder einen einfachen Austausch der Hebel ermöglicht wird.

Des weiteren ist es möglich, am Hebel mit Abstand zu diesem Echolösch-Zapfen anzubringen, der der Bandschichtseite zugeordnet ist. Dadurch wird das Löschfeld direkt wirksam, und nicht indirekt durch den Träger des Bandes hindurch.

Zweckmäßig ist auch, wenn je ein Echolösch-Zylinder in der Nähe jeder Bandumlenkrolle angeordnet ist, so daß je nach Bandwickelgröße einmal der eine und einmal der andere Zylinder als Löscheinrichtung wirksam ist.

Außerdem betrifft die Erfindung Echolöscheinrichtungen selbst in den verschiedenen offenbarten Ausführungen. Auch werden mit diesen Echolöscheinrichtungen versehene Bandkontaktelemente wie Bandführungselemente, Führungshebel, Andruckfedern oder Führungszapfen, -zylinder oder -rollen als ebenfalls erfindungswesentlich betrachtet und nachfolgend beschrieben.

Einzelheiten der Erfindung sind anhand von in der Zeichnung dargestellen Ausführungsbeispielen nachfolgend beschrieben. Es ist dargestellt in

Figur 1 eine Magnetbandkassette mit beweglichen Bandführungselementen
Figur 2 ein schwenkbarer Hebel mit einem Echolösch-Bandstück
Figur 3 eine Andruckfeder mit Echolösch-Bandstücken
Figur 4 eine Kassette mit stationären Echolösch-Zylindern
Figur 5 eine Kassette mit schwenkbaren Führungshebeln und daran angebrachten Echolösch-Zapfen
Figur 6 ein Hebelabschnitt mit Echolösch-Zapfen gemäß Figur 5.

Eine Kompaktkassette 1 besitzt eine Frontseite 2 mit Öffnungen und dahinter verlaufendem Magnetband 11, das über Umlenkrollen 3 und 4 in den Kassettenecken auf die Wickel 12 und 13 auf flanschlosen Wickelkernen 9 bzw. 10 geführt ist. Durch die Mittelöffnungen treten der oder die Magnetköpfe vom Gerät an das Band. Als Bandführungselemente sind beispielsweise schwenkbare, etwa kommaförmige Hebel 5 und 6 mit Höhenführungsflanschen jedem auf- bzw. ablaufendem Bandabschnitt zugeordnet. Die Rückseite

beider Wickel 12 und 13 steht mit einer zweiarmigen Andruckfeder 21 in ständigem Kontakt um Bandabrutschen und Umklappen zu verhindern. Die Feder 21 ist am Gehäusezapfen 19 schwenkbar mittels einer Omega-Biegung 22 gelagert und berührt die Wickel mit den Armen 23 und 24.

Echolöscheinrichtungen können entweder auf den Hebeln 5 und 6 als Echolösch-Bandstücke 7 bzw. 8 zwischen den Flanschen oder auf den Armen 23 und 24 der Feder 21 als Bandstücke 14 oder 15 vorgesehen und geeignet befestigt sein. Es ist auch möglich, Magnetschichten auf die Führungs- bzw. Andruckelemente 5, 6 oder 21 direkt aufzubringen.

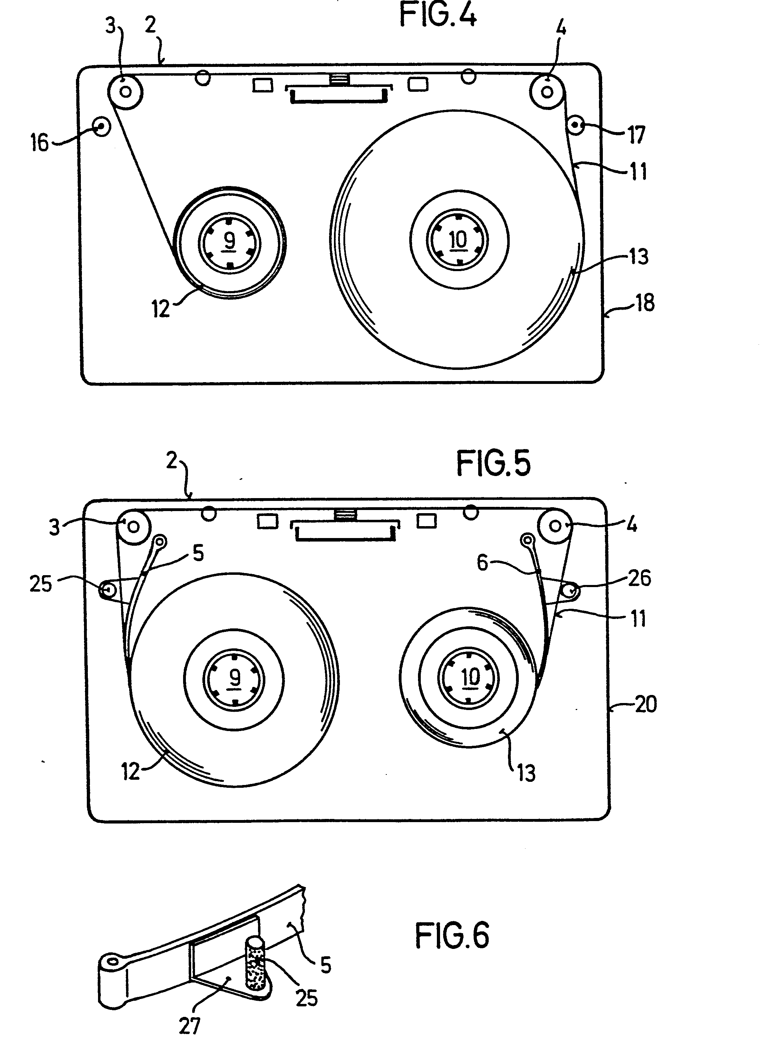

In einer weiteren Ausführung in Figuren 5 und 6 sind die Hebel 5 und 6 mit daran angebrachten Echolösch-Zapfen 25 bzw. 26 versehen. Die Kassette ist mit 20 bezeichnet.

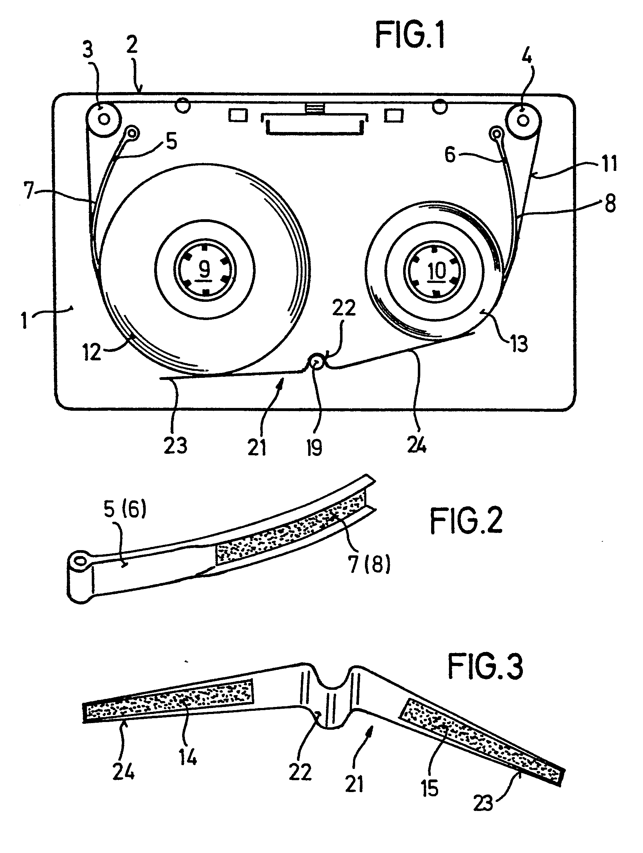

Der Zapfen 25 oder 26 kann aus Kunststoffmaterial bestehen und auf seinem Umfang kann ein Echolösch-Bandstück geeignet befestigt sein. Der Zapfen 25 oder 26 ist an der Außenseite des Hebels 5 bzw. 6 auf einem beispielsweise angesetzten Befestigungswinkel 27 angeordnet, der am Hebel geeignet angebracht ist. Es ist selbstverständlich auch möglich, den Befestigungswinkel 27 am Zapfen 25 bzw. 26 bei der Hebelherstellung gleich mit anzuformen. Dann ist nur noch das Bandstück zu befestigen. Der Umschlingungswickel des Bandes 11 am Zapfen 25, 26 beträgt z.B. etwa $10^o$. Bei dieser Ausbildung der Kassette 20 wirkt die Magnetisierung des Echolösch-Bandes direkt auf die Schichtseite des Bandes 11 wie auch bei der Feder 21 in Figur 3, im Gegensatz zur Hebelausführung in Figuren 1 und 2, wobei die Magnetisierung durch die Folie des Bandes hindurch auf die Magnetschicht wirken muß.

Bei der Ausführung einer Kassette 18 in Figur 4 sind stationäre Umlenk-Zylinder 16 und 17 am Gehäuseboden befestigt. Die Abmessungen jedes Zylinders und die Anordnung zum Band 11 sind so gewählt, daß jeder Zylinder 16 und 17 jeweils die halbe Bandlänge der Kassette echolöschen kann.

Sowohl Zapfen 25, 26 als auch die Zylinder 16 und 17 können auch drehbar gelagert ausgeführt sein.

In allen Kassettenausführungen 1, 18 und 20 war praktisch eine Erhöhung des geräteseitig notwendigen Drehmoments nicht feststellbar. In allen Kassetten konnte auch keinerlei Beschädigung der Magnetschichtseite des Kassettenbandes festgestellt werden.

Die Echo-Löscheinrichtung ist in Figuren 1 bis 6 jeweils ein Teil der Bandführungselemente und kann, soweit diese aus der Kassette entnehmbar sind, auch nachträglich, z.B. nach Art eines Zubehör-Teils, angebracht werden.

Beispiel

Ein Folienstück (Dicke 10 $\mu$m) in Kassettenbandbreite von 1 cm Länge wurde mit einer ca. 50 $\mu$m dicken Schicht eines ferromagnetischen Materials beschichtet. Unter einem Winkel von ca. 25° war eine Aufzeichnung mit einer Wellenlänge von $\lambda$ = 380 $\mu$m mit einem Bandfluß von 2600 nWb/m aufgezeichnet. Der Bandfluß war dabei so bemessen, daß die mit Vormagnetisierung aufgezeichneten Nutzsignale weder bei bewegtem noch bei stillstehendem Band ausgelöscht oder anderweitig beeinträchtigt wurden.

0078997

Für die Untersuchungen war die Schichtseite des Echolösch-Bandstücks in Kontakt mit der Schichtseite des Kassettenbandes, entsprechend der Kassettenausführung in Figur 5.

Um den Einfluß des Echolösch-Bandstücks auf den Kopiereffekt unterschiedlicher Bandsorten festzustellen, wurden Kassetten-Bänder der laufenden Produktion mit einem Meßton von 95 /um ≙ 500 Hz aufgezeichnet und ca. 5 Wochen bei Raumtemperatur gelagert. Anschließend wurden die Kassettenbänder unter wechselnden Betriebsbedingungen (mit bzw. ohne Echolösch-Bandstück) wiedergegeben und die Wiedergabespannungsverhältnisse gemessen mit folgendem Ergebnis:

|  | Werte ohne Echolöschband (dB) | Werte mit Echolöschband (dB) | Verbesserung (dB) | % |
|---|---|---|---|---|
| C 60 FSLHI | 45,0 | 49,0 | 4,0 | 9 |
| C 90 LHIFS | 42,0 | 45,0 | 3,0 | 7 |
| C 60 LHIFS | 43,5 | 46,0 | 2,5 | 6 |
| C 90 Fe/Cr | 46,0 | 52,5 | 6,5 | 14 |
| C 90 CRS | 46,5 | 51,0 | 4,5 | 10 |
| C 60 CRS | 48,0 | 52,5 | 4,5 | 9,5 |
| C 60 CR | 52,5 | 56,5 | 4,0 | 7,5 |
| C 90 CR | 48,5 | 54,0 | 4,5 | 9,5 |

Eine Auswertung der in der Tabelle enthaltenen Werte ergab eine Verbesserung der Kopierdämpfung von 2,5 bis 6,5 dB entsprechend 6 bis 14 % je nach Bandtyp und im Mittel von 9 %, was einen ganz erheblichen Fortschritt darstellt.

Es ist ersichtlich, daß bei den Bändern mit Chromdioxidschichtmaterial die Erhöhung sogar im Bereich von 4 bis
6,5 dB, entsprechend 7,5 bis 14 % liegt, was einem Durchschnittswert von 4,8 dB bzw. 10,1 % entspricht.

Den Messungen liegt die übliche Kassettenwiedergabegeschwindigkeit von 4,75 cm/sec zugrunde.

Bei Magnetbandkassetten, in denen größere Wiedergabegeschwindigkeiten erreicht werden, sind Maßnahmen zur Echolöschung auch bei niedrig remanenten Magnetbändern not-
-wendig. Dabei ist besonders an den Typ einer Magnetbandkassette zu denken, der im wesentlichen aus einem Schutzgehäuse für das Magnetband besteht, wobei in das Schutzgehäuse von außen Bandführungsorgane eintreten. In diesem
Fall ist es zweckmäßig, die Echolöscheinrichtung nicht im
Kassettengehäuse, sondern an den in dasselbe bei Betrieb
eintretenden Bandführungsorganen vorzusehen.

Das Löschbandstück mit Löschaufzeichnung ist mit einer
Aufzeichnung versehen, die in Bandlaufrichtung im Winkel von
ca. 25° abfällt. Es sind auch Winkelbereiche von 10° bis
45° möglich.

Die Originalaufzeichnung wird im Beispiel von 25° Neigung
praktisch nicht meßbar angelöscht.

Um die mechanischen Eigenschaften der Echolöscheinrichtung
noch zu verbessern, ist es zweckmäßig, die Folienseite des
Löschbandstücks direkt zum Kontakt mit der Folienseite
des Kassettenbandes vorzusehen, wodurch die mechanische
Abnutzung wesentlich vermindert wird. In diesem Fall, bei
einer Dicke der Folie des Löschbandes von 10 /um, ist
es notwendig, die Dämpfung des Löschfeldes durch die Folie
durch eine Erhöhung des Löschfeldes auszugleichen, was durch eine Erhöhung des Bandflusses auf ca. 9000 nWb/m erfolgt durch Verwendung eines entsprechend höher koerzitiven Schichtmaterials, z.B. von Chromdioxid-, Metallpigment- oder Metallschichtmaterial mit einer geeigneten Schichtdicke.

Unter Umständen kann es auch zweckmäßig sein, erfindungsgemäße Echolöscheinrichtungen in Kassetten zur Videoaufzeichnung vorzusehen.

Prinzipiell ist es auch möglich, die Bandführungselemente direkt aus Permanentmagnetmaterial in geeigneter Anordnung auszubilden.

Patentansprüche

1. Bandkassette mit aufgewickeltem, bandförmigen Aufzeichnungsträger, der mindestens eine Magnetspur aufweist, <u>dadurch gekennzeichnet</u>, daß im Wege des vom Bandwickel (12, 13) getrennten Aufzeichnungsträgers (11) mindestens eine Echolöscheinrichtung (7, 8, 14, 15, 16, 17, 25, 26) in der Kassette (1, 18, 20) vorgesehen ist.

2. Bandkassette nach Anspruch 1, <u>dadurch gekennzeichnet</u>, daß die Echolöscheinrichtung aus einem magnetisierten Körper, insbesondere einer Magnetschicht besteht.

3. Bandkassette nach Anspruch 3, <u>dadurch gekennzeichnet</u>, daß der magnetisierte Körper ein Magnetbandstück (7, 8, 14, 15) mit einer Magnetaufzeichnung ist.

4. Bandkassette nach Anspruch 2, <u>dadurch gekennzeichnet</u>, daß die Magnetaufzeichnung eine Wellenlänge von ca. $\lambda$ = 380 $\mu$m besitzt.

5. Bandkassette nach Anspruch 4, <u>dadurch gekennzeichnet</u>, daß die Magnetaufzeichnung einen Winkel im Bereich von $10^{\circ}$ bis $45^{\circ}$, insbesondere von $25^{\circ}$ zur Bandlängsachse einschließt.

6. Bandkassette nach Ansprüchen 4 und 5, <u>dadurch gekennzeichnet</u>, daß die Magnetaufzeichnung mit einem magnetischen Fluß im Bereich von 2600 bis 9000 nWb/m aufgezeichnet ist.

7. Bandkassette nach einem oder mehreren der Ansprüche 1 bis 6, dadurch gekennzeichnet, daß die Echolöscheinrichtung an einem Teil des Kassettengehäuses angeordnet ist.

8. Bandkassette nach einem oder mehreren der Ansprüche 1 bis 7, dadurch gekennzeichnet, daß die Echolöscheinrichtung an einem Bandführungselement (5, 6, 21, 16, 17) der Kassette vorgesehen ist.

9. Bandkassette nach Anspruch 8, dadurch gekennzeichnet, daß die Echolöscheinrichtung an einem beweglich gelagerten Bandführungselement, insbesondere an einem Bandführungshebel (5, 6) vorgesehen ist.

10. Bandkassette nach Anspruch 9, dadurch gekennzeichnet, daß ein Echolösch-Bandstück (7, 8) an der Führungsfläche des Bandführungshebels (5 bzw. 6) vorgesehen ist.

11. Bandkassette nach Anspruch 9, dadurch gekennzeichnet, daß an der Hebelseite mit der Führungsfläche mit Abstand zum Hebel ein Echolösch-Zapfen (25, 26) befestigt ist.

12. Bandkassette nach Anspruch 8, dadurch gekennzeichnet, daß ein Echolösch-Zylinder (16, 17) in der Nähe jeder Bandumlenkrolle (3 bzw. 4) angeordnet ist, daß zwischen dem vollen und dem halben Bandwickel der eine Echolösch-Zylinder (17) und zwischen dem halben und dem vollen Bandwickel der andere Echolösch-Zylinder (16) wirksam sind.

13. Bandkassette nach Anspruch 9, dadurch gekennzeichnet, daß die Echolöscheinrichtung an einem an mindestens einem Bandwickel anliegenden Andruckelement (21) vorgesehen ist.

14. Bandkassette nach einem der Ansprüche 1 bis 13, dadurch gekennzeichnet, daß die Echolöscheinrichtung an oder in unmittelbarer Nähe einer Andruckeinrichtung des Bandes an den Kopf vorgesehen ist.

15. Echolöscheinrichtung für eine Bandkassette nach Anspruch 1 und einem oder mehreren der Ansprüche 2 bis 14, gekennzeichnet durch ein Magnetbandstück mit einer Aufzeichnung und einem remanenten Sättigungsfluß im Bereich von 2600 bis 9000 nWb/m.

16. Echolöschungseinrichtung nach Anspruch 15, dadurch gekennzeichnet, daß die Aufzeichnung mit der Längsachse des Bandstücks einen Winkel im Bereich von 10$^{\circ}$ bis 45$^{\circ}$, vorzugsweise von 25$^{\circ}$ bildet.

17. Echolöscheinrichtung nach Ansprüchen 15 und 16, gekennzeichnet durch eine eine Magnetschicht mit Aufzeichnung tragende, mit dem Band und/oder dem Bandwickel bewegliche Bandführungs- oder Andruckeinrichtung (5, 6 oder 21).

18. Bandkassette nach einem oder mehreren der Ansprüche 1 bis 13, dadurch gekennzeichnet, daß die Echolöscheinrichtung in Bandlauf-Richtung zum Magnetkopf ein abnehmendes Löschfeld aufweist.

0078997

19. Bandkassette mit zwei koplanar angeordneten Bandwickeln und Wiedergabebetrieb in zwei Bandlaufrichtungen und je einem dem jeweils auflaufenden bzw. ablaufenden Band zugeordneten Bandführungselement, dadurch gekennzeichnet, daß jedes Bandführungselement (5, 6, 16, 17, 25, 26) eine Echolöscheinrichtung aufweist, die der Magnetspur zugeordnet ist, die vom Magnetkopf wiedergegeben wird, wenn das Band über das Bandführungselement in Richtung zum Magnetkopf abläuft.

20. Bandkassette nach Anspruch 19, dadurch gekennzeichnet, daß die Echolöscheinrichtung aus einem zylindrischen Zapfen (16, 17, 25, 26) besteht.

21. Bandkontaktelement für Magnetbandkassetten, dadurch gekennzeichnet, daß eine mit dem Magnetband wenigstens zeitweise in Kontakt stehende Fläche mit einer Echolöscheinrichtung, vorzugsweise gemäß Patentansprüchen 15 bis 17 versehen ist.

Zeichn.

0078997

1/2

FIG.1

FIG.2

FIG.3

2/2

0078997

FIG.4

FIG.5

FIG.6